# EUROPEAN PATENT SPECIFICATION

(11) **EP 3 623 678 B1**
(45) Date of publication and mention of the grant of the patent: **27.10.2021**
(21) Application number: 18193607.1
(22) Date of filing: 11.09.2018
(51) Int. Cl.: F16L 21/08, F16L 19/065, F16L 19/075, F16L 21/03

(54) **CLAMPING BRACKET SYSTEM**
KLEMMBÜGELSYSTEM
SYSTÈME DE SUPPORT DE SERRAGE

(43) Date of publication of application: 18.03.2020
(73) Proprietor: Georg Fischer Hakan Plastik Boru Ve Profil Sanayi Ticaret Anonim Sirketi, 59500 Cerkezkoy/Tekirdag (TR)
(72) Inventor: Aydogdu, Kenan, 59500 Cerkezkoy - Tekirdag (TR); Önver, Rasit, Corlu-Tekirdag (TR); Pajo, Ugur, Cerkezkoy - Tekirdag (TR)
(74) Representative: Fenner, Seraina

(56) References cited:
- EP-B1- 1 519 094
- GB-A- 1 021 679
- GB-A- 2 195 411
- US-A- 4 648 633

## Description

### FIELD OF THE INVENTION

The present invention relates to a coupling for connecting pipes, consisting of two pieces which are nut and bracket wherein the bracket comprises a gripping part, an external threaded part and one or more split.

### BACKGROUND OF THE INVENTION

Pipes, especially waste water pipes, are connected by means of the muffs and the seals integrated to the pipes. Depending on the conditions and factors such as pressure and temperature causing stretching or failure of the pipe, the connections may be weaken and leaking may be occur or even pipes may be displaced. This problem shows up particularly in marine grade pipe systems which are exposed to perform in the harshest environments and changing temperature, pressure and exterior ambient conditions.

To overcome these problems, a large number of coupling or fitting assembly for connecting pipes are developed in the prior art. These coupling must be capable of withstanding stresses and resisting different loads acting thereon such as pressure and temperature as defined before and should be able to hold together the pipes. Structure configured by connecting the plurality of pipes may be subject to a variety of loads that may adversely affect the coupling.

The pipe coupling assembly in the prior art generally includes a substantial number of parts which may be a nut, a body, a gripping member, one or more seal and additionally one or more washer. The nut and the body are incorporated by means of threads and pipes are inserted through the nut, gripping members, seals and washers into the body. It is desirable to eliminate some of these parts in order to provide easy mounting. For example, the granted patents US5466019A and US5957509A are about couplings comprising a nut, a body, a seal, a washer, a grab ring and a wedge ring. However, excess number of the parts complicate the assemblage and the mounting of coupling material. Because of the length of the piping system consisting of several pieces, easy assemblage is one of the most important object. Additionally, when the number of part increases, fastening and compacting of these parts become difficult. Thereby cavities between the pieces of coupling may occur and the possibility of leakage increases.

Even, couplings comprising some parts are incorporated by using adhesive material are found in the prior art. But, the assemblage of this type of couplings is time-consuming with a burdensome cost. Furthermore, couplings of the prior art comprise also metal pieces which can be oxidized and corroded.

To overcome these problems, other pipe couplings have been designed in prior art. The granted patents numbered as EP1386107B1 and EP1519094B1 disclose coupling assemblies comprising a nut, a body, a seal and a gripping member which is suitable for engaging the outer surface of a pipe. However, there is still a need in the art for connecting the pipes and also other tubular materials in an easy, effective and reliable manner avoiding the above mentioned technical drawbacks.

GB2195411A discloses pipe connector consisting of two pieces.

US4648633 discloses a coupling arragement for connecting two pipe elements.

### OBJECTOF THE INVENTION

It is therefore an object of the present invention to develop an improved coupling to connect tubular articles, especially pipes, wherein the coupling withstands different loads such as high pressures, high or low temperatures or sudden changes on ambient condition and wherein the coupling hold together the tubular articles in a fluid tight manner.

This object is solved by a coupling arrangement according to claim 1. In one aspect, the present invention comprises a novel coupling which is easily connectable without requiring welding or soldering or other conventional securing techniques used in the connection of pipes and by this way it is also easy to disassemble the coupling. Furthermore, the present invention also provides a coupling wherein the pipes may be inserted into an already assembled coupling.

In further aspect, the present invention comprises a coupling consisting of two pieces wherein it is easy to maintain integrity of the structure and thereby cavity and leakage problems are eliminated.

In one aspect, the present invention comprises a coupling which ensures an easy and reliable assemblage and also which is produced in an easy and low cost manner.

In further aspect, the present invention comprises a coupling made of plastic material since therefore the corrosion and oxidation risk are eliminated.

### BRIEF DESCRIPTION OF THE DRAWINGS

The accompanying drawings, which are incorporated in and constitute a part of this specification, illustrate an implementation of the invention and, together with the description, serve to explain the advantages and principles of the invention. In the drawings,
FIG. 1 is a perspective view of the bracket (1a) according to one embodiment of the present invention comprising an axially-extending split (9) which is axially extended along the whole extension of side surface of the bracket.
FIG. 2 a perspective view of the bracket (1b) according to another embodiment of the present invention comprising protrusion (15) and axially-extending split (14) which is partially extended along the extension of side surface of threaded part (8).
FIG. 3 is a perspective view of the nut (2) according to the present invention;
FIG. 4 is an cross-sectional view of the pipe coupling (20a) according to the present invention when the nut (2) has been tightened and when the bracket (1a) comprising an axially-extending split (9) which is axially extended along the whole extension of side surface of the bracket; and
FIG. 5 is a cross-sectional view of the pipe coupling (20b) according to the present invention when the nut (2) has been tightened and when the bracket (1b) comprising protrusion (15) and axially-extending split (14) which is partially extended along the extension of side surface of threaded part (8).

### DETAILED DESCRIPTION OF THE INVENTION

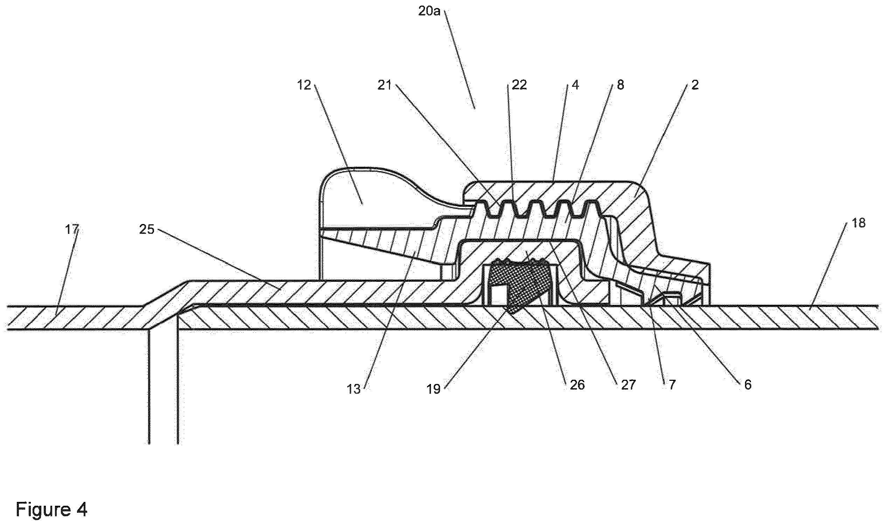

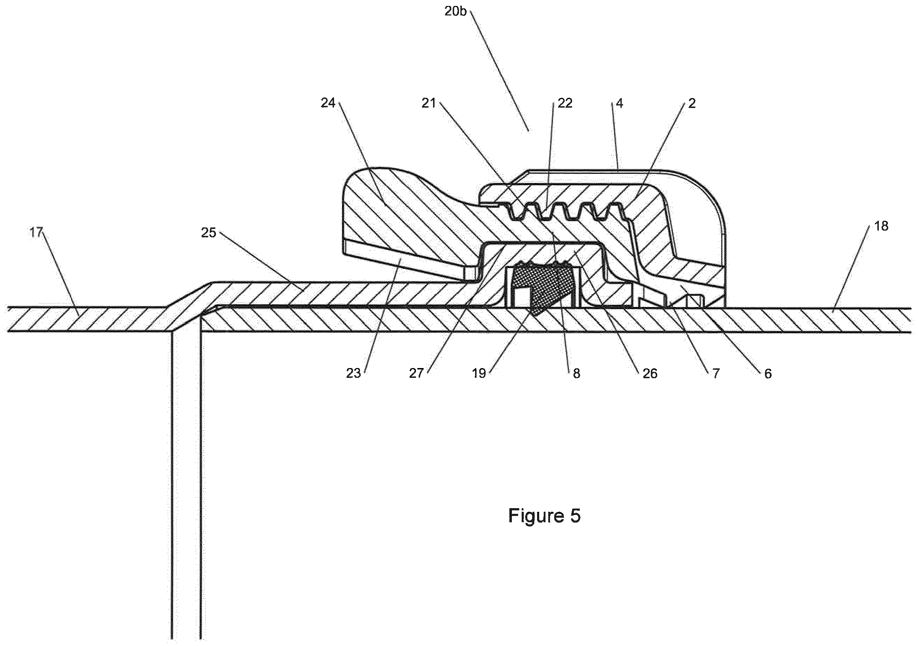

Shown in Figures 4 and 5 is a coupling (20a or 20b) with two aligned and separate pipe sections (17 or 18) to be inserted into the coupling and to be incorporated by means of the coupling. According to first embodiment of the present invention, the coupling (20a or 20b) consists of two pieces which are nut (2) and bracket (1a or 1b) wherein the bracket comprises a gripping part (5), an external threaded part (8) and a split (9 or 14).

The present invention comprises a coupling for connecting pipe (17-18), consisting of two pieces which are;
- a bracket (1a or 1b) including a gripping part (5) comprising one or more protrusion (6) on the front section which are adapted to engage second pipe section (17), an external threaded part (8) comprising external threads (21) and one or more axially-extending split (9 or 14) located on the threaded part (8), and
- a nut (2)including an internal threaded part (4) comprising internal threads (22) engaging to external threads (21) of the bracket.

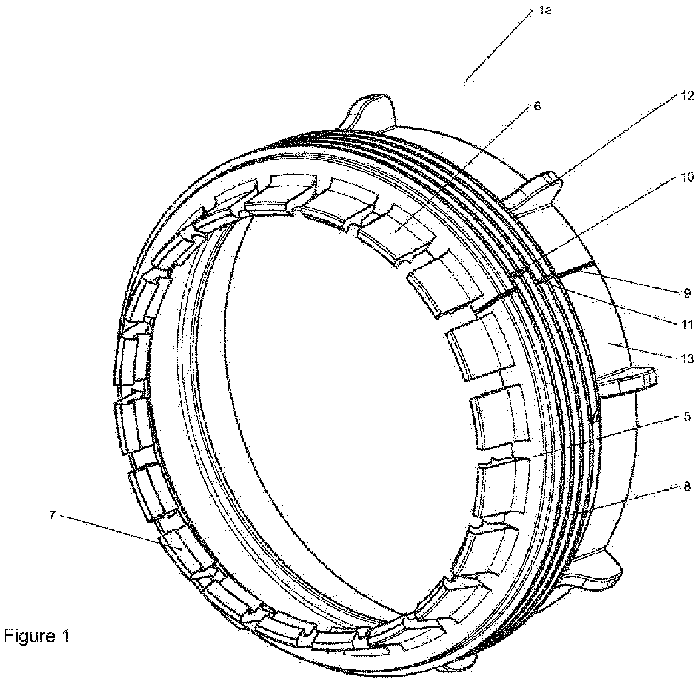

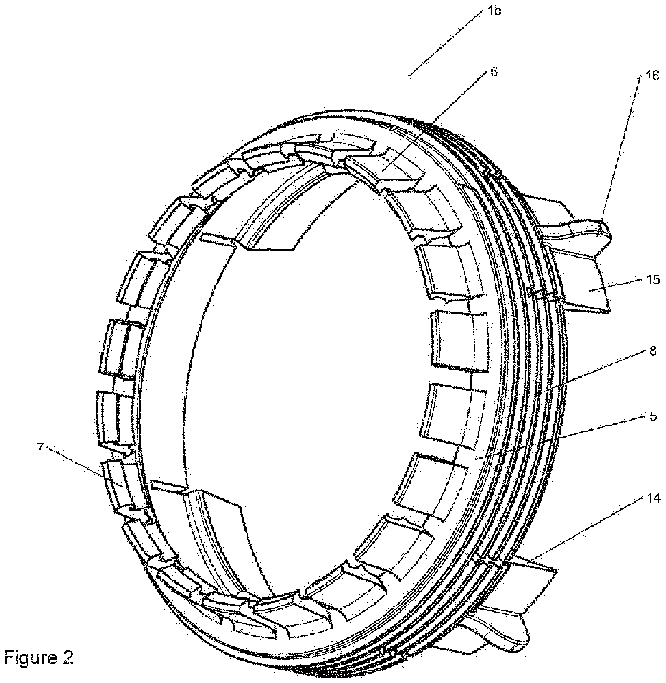

In one embodiment referring to Figures 1 and 2, the present invention provides the bracket (1a or 1b) which is hollow and open at each end and which includes a gripping part (5) which is radially and inwardly deformable to grip and engage second pipe section (17). The gripping part (5) comprises one or more protrusion (6) on the front section which are adapted to engage second pipe section (18) and to provide a secure and sufficient hold on the pipe against the pressure. When the nut is screwed on the bracket, inner surface of gripping part (6) is pushed radially and inwardly and is engaged to the outer surface of the second pipe section (18). In one embodiment of the present invention, protrusion (6) of gripping part (5) further comprises hooked projections (7) on inner surface of the protrusion assist also to the tightening movement of the gripping part by being radially compressed.

According to the present invention, the bracket (1a and 1b) further comprises an external threaded part (8) comprising external threads (21) engaging to internal threads (22) of the nut (2), wherein the external threaded part is fixed and stationary upon the first pipe section (17). Said first pipe section includes one annular recess (26) in which a seal (19) is located on the front portion (25) of first pipe section (17). Accordingly, the present invention provides that external threaded part (8) of the bracket is particularly mounted upon the annular recess (26) in which a seal (19) is located on the front portion (25) of first pipe section (17) and that the bracket is locked onto the first pipe section and is immobilized. When the nut (2) is tightened on the bracket, inner surface (27) of the external threaded part (8) of bracket compress the annular recess (26) and implicitly the seal (19) towards second pipe section and by this way tightness and impermeability of the coupling is increased.

In a further embodiment of the present invention referring to Fig. 1, the bracket (1a) may include a split (9) that allows the bracket of being elastically closed or opened and wherein the splits are extended axially along the whole extension of its side surface. Herein, one side of the split (9) comprises one or more protrusion (11) and other side comprises one or more recess (10) corresponding to the protrusion. In one preferred embodiment, the protrusion (11) and corresponding recess (10) are found in threaded part (8) of the bracket. In this context, threaded part (8) of the bracket contains a collapsible structure differing from stable threads of couplings in the prior art. While mounting the bracket, collapsible threads become automatically stable and fixed by means of protrusion (11) and recess (10) found in the threaded part of the bracket. By this way, the bracket is easily fixed on the pipe section and by engaging external threads to internal threads, the nut is easily screwed on the bracket not seeing any incompatibility problem between them.

In another embodiment of the present invention referring Fig 2., the bracket (1b) may include at least two splits (14) that allow the bracket of being elastically and radially deformed so that the bracket is easily and effortlessly engaged to the pipe, wherein the splits are partially extended along the extension of side surface of threaded part (8). According to the present invention referring Fig. 2, threaded part (8) of the bracket comprises one or more protrusion (15) which are located on lower section between two axially-extending splits (14). These protrusions which are able to be radially deformed provide the bracket to be easily mounted on the first pipe section. In one preferred embodiment, at least two protrusions (15) are located on opposite sides of threaded part (8) of the bracket and more preferably four protrusions are located on opposite sides of threaded part of the bracket.

In another preferred embodiment, protrusions (15) of the bracket (1a) comprises at least one support rib (16) on the outer surface. Thus, the present invention provides the bracket to be easily mounted by means of the elastic characteristic of the material composing the bracket and also by means of the structure of bracket comprising protrusions (15) and axially-extending splits (14) while at the same time the present invention provides the bracket to be stable and resisting to tensile or axial load of the pipes.

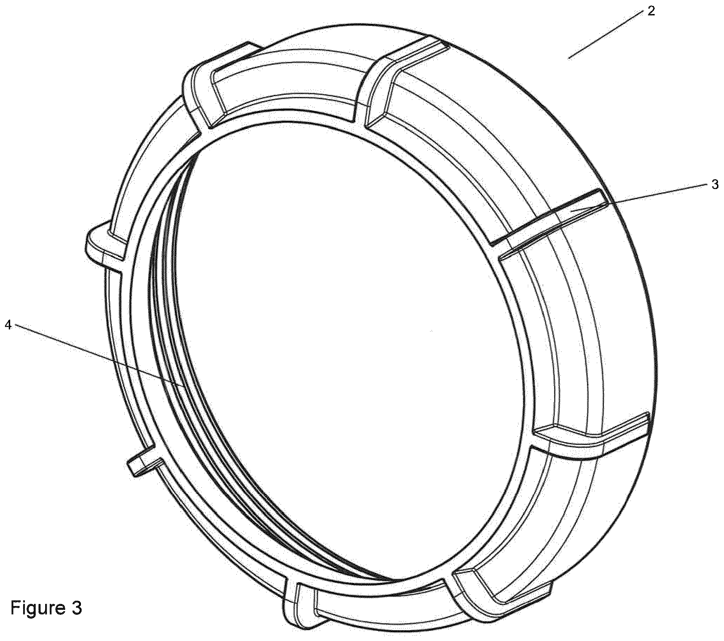

In another embodiment of the present invention referring to Figure 3, the nut (2) includes including an internal threaded part (4) comprising internal threads (22) engaging to external threads (21) of the bracket such that the nut is locked to the bracket. Furthermore, the nut (2) also comprises one or more support rib (3) on the outer surface in order to strengthen the nut against inner pressure and to easily rotate the nut. When the nut (2) is tightened, upper inner surface of the nut is radially compressed onto the gripping part (5) and the protrusion (6) of bracket such that protrusion engages second pipe section (18). When the nut is not tightened, protrusion of the bracket does not engage pipe section.

In one embodiment of the present invention referring Figure 3, the nut (2) includes support ribs (3) available across from each other on the outer surface to aid in rotating the nut. These ribs also provide to increase the strength of nut and implicitly the strength of coupling against the pressure. While the material used to compose the coupling must have an elastic characteristic to provide an easy usage, the endurance to pressure and to temperature must also be provided. Ribs on the outer surface of nut according to the present invention ensure sufficient endurance for the coupling.

Herein, the elasticity of the material composing the bracket also helps to the collapsible property of the bracket. Therefore, in one embodiment of the present invention, the coupling is made of plastic material; preferably the bracket is made of polyoxymethylene or polypropylene and the nut is made of polypropylene.

In another embodiment, pipes to be connected by using the coupling according to the present invention are preferably polymeric and plastic and these pipes are pipe with socket type pipes including welding and/or push fit shape. These pipes comprises also one or more seal as already described in prior art.

In another embodiment, the coupling according to the present invention is used for connecting pipes which are of a nominal diameter in a range of between 30 mm and 300 mm and preferably 32 mm.

The coupling arrangement according to the present invention can be mounted by the method comprising the following steps:
- first pipe section (17) comprising an annular recess (26) in which a seal (19) is located on the front portion (25) of first pipe section is inserted within the bracket (1a and 1b),
- nut is mounted to second pipe section (18) without tightening the nut wherein said nut having an internal threaded section (22) to engage with external threaded section (22) of the bracket,
- second pipe section (18) is nestled in the first pipe section (17) in such a manner that second pipe section can be enclosed by first pipe section while said first pipe section has a greater nominal diameter than the second pipe section.
- nut (2) is screwed on the bracket (1a and 1b) until internal threaded section of the nut is engaged to external threaded section of the bracket and until the nut is fully tightened and locked such that upper inner surface of the nut is radially compressed onto inner surface of the gripping part (5)

## Claims

1. A coupling arrangement comprising a first pipe section (17) and a coupling (20) for connecting the first pipe section (17) with a second pipe section (18), the coupling consisting of only two pieces which are;
- a bracket (1a; 1b) including a gripping part (5) comprising one or more protrusions (6) on a front section which are adapted to engage the second pipe section (18), an external threaded part (8) comprising external threads (21) and one or more axially-extending splits (9; 14) located on the threaded part (8), wherein the external threaded part (8) of the bracket is mounted upon an annular recess (26) of the first pipe section (17) for locating a seal (19) in a front portion (25) of the first pipe section (17) and
- a nut (2)including an internal threaded part (4) comprising internal threads (22) engaging to the external threads (21) of the bracket.

2. The coupling arrangement according to claim 1, wherein the bracket further comprises one or more support ribs (12; 16) on a lower section axially opposite the front section in order to strengthen the bracket against inner pressure.

3. The coupling arrangement according to claim 1 or 2, wherein the nut (2) further comprises one or more support ribs (3) on the outer surface.

4. The coupling arrangement according to any one of claims 1 to 3, wherein the one or more protrusions (6) includes one or more hooked projections (7) on an inner surface of the front section.

5. The coupling arrangement according to any preceding claims, wherein the bracket includes one axially-extending split (9) which is axially extended along the whole extension of side surface of the bracket (1a).

6. The coupling arrangement according to claim 5, wherein one side of the split (9) comprises one or more protrusions (11) and other side comprises one or more recesses (10) corresponding to the one or more protrusions.

7. The coupling arrangement according to claim 6, wherein the one or more protrusions (11) and corresponding one or more recesses (10) are found in the threaded part (8) of the bracket.

8. The coupling arrangement according to any one of claims 1 to 4, wherein the bracket (1b) includes at least two axially-extending splits (14) which are partially extended along the extension of side surface of the threaded part (8) and wherein the threaded part comprises one or more protrusions (15) are located on a lower section between two axially-extending splits (14).

9. The coupling arrangement according to claim 8, wherein at least two protrusions (15) are located on opposite sides of the threaded part (8) of the bracket.

10. The coupling arrangement according to claim 9, wherein four protrusions (15) are located on opposite sides of the threaded part (8) of the bracket.

## Patentansprüche

1. Kupplungsanordnung, umfassend einen ersten Rohrabschnitt (17) und eine Kupplung (20), um den ersten Rohrabschnitt (17) mit einem zweiten Rohrabschnitt (18) zu verbinden, wobei die Kupplung aus lediglich zwei Teilen besteht, und zwar:
- einer Halterung (1a; 1b), die einen Greifteil (5), der an einem vorderen Abschnitt einen oder mehrere Vorsprünge (6) umfasst, die dazu ausgeführt sind, den zweiten Rohrabschnitt (18) in Eingriff zu nehmen, einen Außengewindeteil (8), der ein Außengewinde (21) umfasst, und einen oder mehrere sich axial erstreckende Spalte (9; 14) aufweist, die an dem Gewindeteil (8) angeordnet sind, wobei der Außengewindeteil (8) der Halterung an einer ringförmigen Aussparung (26) des ersten Rohrabschnitts (17) montiert ist, um eine Dichtung (19) in einem vorderen Abschnitt (25) des ersten Rohrabschnitts (17) anzuordnen, und
- einer Mutter (2), die einen Innengewindeteil (4) aufweist, der ein Innengewinde (22) umfasst, das mit dem Außengewinde (21) der Halterung in Eingriff kommt.

2. Kupplungsanordnung nach Anspruch 1, wobei die Halterung ferner eine oder mehrere Stützrippen (12; 16) an einem unteren Abschnitt axial gegenüber dem vorderen Abschnitt umfasst, um die Halterung gegen Innendruck zu stärken.

3. Kupplungsanordnung nach Anspruch 1 oder 2, wobei die Mutter (2) ferner eine oder mehrere Stützrippen (3) an der Außenfläche umfasst.

4. Kupplungsanordnung nach einem der Ansprüche 1 bis 3, wobei der eine oder die mehreren Vorsprünge (6) eine oder mehrere hakenförmige Nasen (7) an einer Innenfläche des vorderen Abschnitts aufweist.

5. Kupplungsanordnung nach einem der vorhergehenden Ansprüche, wobei die Halterung einen sich axial erstreckenden Spalt (9) aufweist, der sich axial entlang der gesamten Seitenflächenerstreckung der Halterung (1a) erstreckt.

6. Kupplungsanordnung nach Anspruch 5, wobei eine Seite des Spalts (9) einen oder mehrere Vorsprünge (11) umfasst und die andere Seite eine oder mehrere Aussparungen (10) umfasst, die dem einen oder den mehreren Vorsprüngen entsprechen.

7. Kupplungsanordnung nach Anspruch 6, wobei sich der eine oder die mehreren Vorsprünge (11) und die entsprechende eine oder die entsprechenden mehreren Aussparungen (10) in dem Gewindeteil (8) der Halterung befinden.

8. Kupplungsanordnung nach einem der Ansprüche 1 bis 4, wobei die Halterung (1b) mindestens zwei sich axial erstreckende Spalte (14) aufweist, die sich teilweise entlang der Seitenflächenerstreckung des Gewindeteils (8) erstrecken, und wobei der Gewindeteil einen oder mehrere Vorsprünge (15) umfasst, die an einem unteren Abschnitt zwischen zwei sich axial erstreckenden Spalten (14) angeordnet sind.

9. Kupplungsanordnung nach Anspruch 8, wobei mindestens zwei Vorsprünge (15) an gegenüberliegenden Seiten des Gewindeteils (8) der Halterung angeordnet sind.

10. Kupplungsanordnung nach Anspruch 9, wobei vier Vorsprünge (15) an gegenüberliegenden Seiten des Gewindeteils (8) der Halterung angeordnet sind.

## Revendications

1. Dispositif de couplage comprenant une première section de tuyau (17) et un raccord (20) pour connecter la première section de tuyau (17) à une seconde section de tuyau (18), le raccord étant constitué de seulement deux pièces qui sont :
- un support (1a ; 1b) comprenant une partie de préhension (5) comprenant une ou plusieurs saillies (6) sur une section avant qui sont conçues pour venir en prise avec la seconde section de tuyau (18), une partie filetée externe (8) comprenant des filets externes (21) et une ou plusieurs fentes s'étendant axialement (9 ; 14) situées sur la partie filetée (8), dans lequel la partie filetée externe (8) du support est montée sur un évidement annulaire (26) de la première section de tuyau (17) pour positionner un joint (19) dans une partie avant (25) de la première section de tuyau (17) et
- un écrou (2) comprenant une partie filetée interne (4) comprenant des filets internes (22) venant en prise avec les filets externes (21) du support.

2. Dispositif de couplage selon la revendication 1, dans lequel le support comprend en outre une ou plusieurs nervures de support (12 ; 16) sur une section inférieure axialement opposée à la section avant afin de renforcer le support contre la pression interne.

3. Dispositif de couplage selon la revendication 1 ou 2, dans lequel l'écrou (2) comprend en outre une ou plusieurs nervures de support (3) sur la surface extérieure.

4. Dispositif de couplage selon l'une quelconque des revendications 1 à 3, dans lequel la ou les saillies (6) comprennent une ou plusieurs saillies en crochet (7) sur une surface intérieure de la section avant.

5. Dispositif de couplage selon l'une quelconque des revendications précédentes, dans lequel le support comprend une fente s'étendant axialement (9) qui s'étend axialement le long de toute l'extension de la surface latérale du support (1a).

6. Dispositif de couplage selon la revendication 5, dans lequel un côté de la fente (9) comprend une ou plusieurs saillies (11) et l'autre côté comprend un ou plusieurs évidements (10) correspondant à la ou aux saillies.

7. Dispositif de couplage selon la revendication 6, dans lequel la ou les saillies (11) et le ou les évidements (10) correspondants se trouvent dans la partie filetée (8) du support.

8. Dispositif de couplage selon l'une quelconque des revendications 1 à 4, dans lequel le support (1b) comprend au moins deux fentes s'étendant axialement (14) qui sont partiellement étendues le long de l'extension de la surface latérale de la partie filetée (8) et dans lequel la partie filetée comprend une ou plusieurs saillies (15) qui sont situées sur une section inférieure entre deux fentes s'étendant axialement (14).

9. Dispositif de couplage selon la revendication 8, dans lequel au moins deux saillies (15) sont situées sur des côtés opposés de la partie filetée (8) du support.

10. Dispositif de couplage selon la revendication 9, dans lequel quatre saillies (15) sont situées sur les côtés opposés de la partie filetée (8) du support.
